# EUROPÄISCHE PATENTSCHRIFT

(11) **EP 1 200 535 B1**
(45) Veröffentlichungstag und Bekanntmachung des Hinweises auf die Patenterteilung: **10.11.2004**
(21) Anmeldenummer: 00942079.5
(22) Anmeldetag: 16.06.2000
(51) Int. Cl.: C09K 5/20

(54) **SILIKAT-, BORAT- UND PHOSPHATFREIE KÜHLFLÜSSIGKEITEN AUF BASIS VON GLYKOLEN MIT VERBESSERTEM KORROSIONSVERHALTEN**
SILICATE, BORATE AND PHOSPHATE-FREE GLYCOL BASED COOLING LIQUIDS WITH IMPROVED CORROSION STABILITY
LIQUIDES DE REFROIDISSEMENT SANS SILICATES, SANS BORATES, ET SANS PHOSPHATES, A BASE DE GLYCOLS POSSEDANT UNE RESISTANCE A LA CORROSION AMELIOREE

(30) Priorität: 02.07.1999 DE 19930682
(43) Veröffentlichungstag der Anmeldung: 02.05.2002
(73) Patentinhaber: Clariant GmbH, 65929 Frankfurt am Main (DE)
(72) Erfinder: MINKS, Peter, D-84503 Altötting (DE); SCHUSTER, Johann, D-84556 Kastl (DE)
(86) Internationale Anmeldenummer: PCT/EP2000/005535
(87) Internationale Veröffentlichungsnummer: WO 2001/002511

(56) Entgegenhaltungen:
- EP-A- 0 398 284
- DE-A- 19 625 692
- US-A- 5 300 247
- DATABASE WPI Section Ch, Week 199428 Derwent Publications Ltd., London, GB; Class E19, AN 1994-230785 XP002148001 & JP 06 166867 A (CCI KK), 14. Juni 1994 (1994-06-14)

## Beschreibung

Die vorliegende Erfindung betrifft eine neue Kühlflüssigkeit auf der Basis von Glykolen, die frei von Silikaten ist, keine Phosphate, Nitrite, Borate sowie Amine enthält und eine hervorragende Korrosionsinhibierung gegenüber verschiedenen metallischen Werkstoffen aufweist.

Zum frostsicheren Kühlen von technischen Einrichtungen, insbesondere von Kraftfahrzeugmotoren, werden bekanntlich Flüssigkeiten auf Basis von Glykolen, vor allem Ethylenglykol und/oder Propylenglykol eingesetzt. Um die Werkstoffe des Kühlsystems vor Korrosion zu schützen, enthalten diese Flüssigkeiten jeweils wirksame Mengen an einem oder mehreren Korrosionsinhibitoren. Zur Verwendung in Kühlsystemen werden sie mit Wasser verdünnt und sollen neben Frost- und Korrosionsschutz auch für eine gute Wärmeabfuhr sorgen. Dabei weisen moderne Verbrennungsmotoren wegen der höheren Temperaturbelastung der Metalloberflächen, der erhöhten Fließgeschwindigkeit des Kühlmediums und der Werkstoffauswahl erschwerte Betriebsbedingungen für das Kühlmedium auf. Auch die verstärkte Verwendung von Leichtmetall-Legierungen auf Aluminiumbasis zusammen mit Stahl, Gußeisen, Messing, Kupfer und Weichlot in Mischbauweise erfordert eine sorgfältige Abstimmung der verwendeten Inhibitorenkombination. In den letzten Jahrzehnten wurden unzählige dieser Kombinationen in der einschlägigen Patentliteratur beschrieben, so daß zahlreiche inhibitorensysteme mit speziellen Wirkungsmechanismen bekannt sind. So wurden die früher üblichen nitrit- und silikathaltigen Kombinationen bestehend aus Nitriten, Nitraten, Boraten, Phosphaten, Benzoaten, Triazolen und Silikaten (z.B. H. D. Held, Kühlwasser, 2. Aufl. S. 213 - 225 (1977)) durch nitritfreie Zubereitungen in der Regel auf Basis von Mono- und Dicarbonsäuren ersetzt (z.B. EP-A-0 035 834), die jedoch als wirksame Aluminiuminhibitoren ebenfalls nach wie vor Silikate enthielten, wenn auch in stabilisierter Form.

Es ist seit langem bekannt, daß Borate das Korrosionsverhalten des Aluminiums unter Wärmedurchgangsbedingungen stark verschlechtern können. Durch Silikate kann dies verhindert werden, so daß man unter optimalen Bedingungen ein ausgewogenes Verhältnis erzielen kann. Die Praxis zeigte, daß es unter bestimmten Betriebsbedingungen trotz einer Stabilisierung der Silikate, beispielsweise durch Organosiliciumverbindungen, zur Verminderung des Silikatgehaltes, z.B. durch Ausfällungen unlöslicher Silikatmodifikationen bei sehr hohen Temperaturen, kommen kann. Dies führte zur Entwicklung silikatfreier Formulierungen, die eine wesentlich höhere Lebensdauer aufweisen, da sie diesen Nachteil nicht besitzen, siehe EP-A-0 816 467.

Die Aufgabe der vorliegenden Erfindung war, Inhibitorensysteme für Kühlmittel zu finden, die ohne Borate und Silikate arbeiten und dennoch einen guten Korrosionsschutz der in modernen Motoren eingesetzten Metalle, insbesondere Aluminium- und Eisenwerkstoffe, unter hoher Temperaturbelastung auf der Metalloberfläche bewirken sollen.

Gegenstand der Erfindung ist daher ein Kühlmittelkonzentrat, bestehend aus
a) 0,1 bis 6 Gew.-% mindestens einer Mono- und/oder Dicarbonsäure mit 4 bis 16 C-Atomen in Form von Alkalimetallsalzen
b) 0,02 bis 2 Gew.-% einer Triazin-triiminocarbonsäure in Form ihres Alkalimetallsalzes
c) 0,02 bis 2 Gew.-% mindestens eines Kohlenwasserstofftriazols,
d) 0,01 bis 1 Gew.-% mindestens eines wasser löslichen Erdalkalisalzes
e) gegebenenfalls bis 4 Gew.-% Wasser,
f) gegebenenfalls geeigneten Additiven und
g) mindestens 90 Gew.-% Glykolen ad 100 Gew.-%,
jeweils bezogen auf das Gesamtgewicht des Konzentrats.

Weiterhin betrifft die vorliegende Erfindung auch gebrauchsfertige wäßrige Kühlmittelzusammensetzungen, die je nach gewünschter Frostsicherheit Wasser in Mengen von 10 bis 90, vorzugsweise 20 bis 60 Gew.-% und das erfindungsgemäße Kühlmittelkonzentrat ad 100 Gew.-% enthalten.

Die erfindungsgemäße Kühlflüssigkeit enthält keine Alkalimetallphosphate, keine Alkalimetallmolybdate, Alkaliborate und Alkalimetallnitrite, sowie keine Amine.

Als Monocarbonsäuren werden besonders bevorzugt verzweigte und/oder unverzweigte aliphatische Monocarbonsäuren mit einer Kettenlänge von 5 bis 12 C-Atomen, z.B. Pentansäure, Hexansäure, Oktansäure, 2-Ethylhexansäure, Nonansäure, Isononansäure, Decansäure, Undecansäure und Dodecansäure, verwendet. Als Dicarbonsäuren kommen insbesondere solche mit 4 bis 12 C-Atomen in Betracht, insbesondere mit 8 bis 12 C-Atomen, z.B. Korksäure, Acelainsäure, Sebazinsäure, Undecandisäure, Dodecandisäure, Phthalsäure oder Terephthalsäure.

Die oben genannten Mono- und Dicarbonsäuren können nach dem Stand der Technik auch in Mischungen, üblicherweise 1:99 bis 99:1 eingesetzt werden. Die verwendeten Carbonsäuren können zusätzlich noch Hydroxylgruppen und/oder Ethersauerstoffatome oder Carboxylfunktionen enthalten. Die jeweiligen Carbonsäuren liegen in der Regel als Alkalimetallsalze, z.B. des Natriums, Kaliums, Lithiums oder als Ammoniumsalze vor. Mono- und Dicarbonsäuren sind im erfindungsgemäßen Kühlmittelkonzentrat vorzugsweise zu 1 bis 5, insbesondere
2 bis 4 Gew.-% enthalten.

Die Triazintriiminocarbonsäure kann endständige Carbonsäurereste mit einer Kettenlänge von C₂ bis C₁₀, insbesondere von C₆, aufweisen. Letztere wird im Handel unter der Bezeichnung Irgacor® L 190 angeboten. Besonders bevorzugt ist die 6,6',6"-(1,3,5-Triazin-2,4,6-Triyltriimino)trihexansäure, die als Alkalimetallsalz eingesetzt wird. Die Triazintriiminocarbonsäure ist im erfindungsgemäßen Kühlmittelkonzentrat vorzugsweise zu 0,1 bis 1, insbesondere zu 0,1 bis 0,5 Gew.-% enthalten.

Erdalkalisalze werden als zusätzlicher Inhibitor eingesetzt. Besonders bevorzugt sind wasserlösliche Magnesium- und/oder Kalziumsalze, von verschiedenen anorganischen Säuren wie Magnesiumnitrat, Kalziumnitrat in Mengenverhältnissen von 0 : 100 bis 100 : 0. Die Erdalkalisalze sind im erfindungsgemäßen Kühlmittelkonzentrat vorzugsweise zu 0,05 bis 0,8, insbesondere 0,1 bis 0,5 Gew.-% enthalten.

Als Triazole werden Kohlenwasserstofftriazole, insbesondere Benzo- und/oder Tolyltriazol bzw. deren Derivate verwendet. Die Triazole sind im erfindungsgemäßen Kühlmittelkonzentrat vorzugsweise zu 0,05 bis 1, insbesondere zu 0,1 bis
0,5 Gew.-% enthalten.

Als Ethylenglykole und/oder Propylenglykole mit 1 bis 3 Oxethylen- bzw. Oxpropyleneinheiten werden vorzugsweise Ethylenglykol, Diethylenglykol, Propylenglykol und/oder Dipropylenglykol eingesetzt. Besonders bevorzugt sind Ethylenglykol und/oder Propylenglykol. Sie bilden den Hauptbestandteil der erfindungsgemäßen Kühlflüssigkeit. Ihr Anteil beträgt mindestens 90 Gew.-%, in der Regel 90 bis 98 Gew.-%, bevorzugt 92 bis 95 Gew.-%, bezogen auf das Gewicht des Kühlkonzentrates.

Eine besonders bevorzugte erfindungsgemäße Kühlflüssigkeit besteht beispielsweise aus:
a) 2 - 5 Gew.-% 2-Ethylhexansäure, Natriumsalz
b) 0,1 - 0,3 Gew.-% Triazintriyltriiminotrihexansäure, Natriumsalz
c) 0,05 - 0,3 Gew.-% Benzo- und/oder Tolyltriazol
d) 0,02 - 0,2 Gew.-% Magnesiumnitrat 6 H₂O
e)/g) Rest Ethylenglykol und/oder Propylenglykol mit gegebenenfalls 1 bis 3 % Wasser als Lösungsvermittler.

Das erfindungsgemäße Kühlkonzentrat kann zusätzlich zu den genannten Komponenten a) bis e) weitere zweckmäßige Additive f) wie Alkalimetallnitrate, Hartwasserstabilisatoren (z. B. Polyacrylsäure-Maleinsäure-Copolymere), Antischaummittel, Kaviationsschutzmittel, Bitterstoffe und Farbstoffe enthalten. Der pH-Wert der erfindungsgemäßen Mischung liegt üblicherweise im Bereich von 7 - 10, insbesondere 7,5 - 9, gemessen in einer wässerigen Verdünnung von 1: 2. Er wird durch Zugabe von Alkalien, insbesondere Natron- oder Kalilauge, eingestellt.

### Beispiele:

Die Erfindung wird nun anhand von Beispielen A - E und dem Vergleichsbeispiel näher erläutert.

In der nachstehenden Tabelle I sind verschiedene erfindungsgemäße Kühlsysteme, die durch Mischen der aufgeführten Komponenten hergestellt wurden, angegeben. Sie enthält auch das Vergleichsbeispiel.

Bei dem in der Tabelle I aufgeführten Vergleichsbeispiel handelt es sich um ein handelsübliches silikatfreies Kühlerfrostschutzmittel nach dem Stand der Technik gemäß EP-A-0 816 467.

Die antikorrosive Wirkung des erfindungsgemäßen Kühlsystems und des Vergleichsbeispiels nach dem nächstliegendem Stand der Technik wurde nach ASTM D 1384-94 und mittels eines sog. Heißkorrosionstests geprüft. Bei der ASTM D 1384-Methode handelt es sich um einen statischen Screeningtest, bei dem die zu prüfenden Metalle in einer Kühlflüssigkeit erhitzt werden. Dabei nehmen die Prüfmetalle die Temperatur der Flüssigkeit an. Verschärfend im obigen Test wurde in einer Prüfkonzentration von 20 Vol-% ermittelt, um die Inhibierungsvorteile besonders auf Stahl und Gußeisen darzustellen. Bei der Heißkorrosionsprüfung gemäß FW (= Forschungsvereinigung für Verbrennungskraftmaschinen), Heft R 443, wurde im Rahmen der vorliegenden Prüfungen als Metall-Gußaluminium AISi₁₀Mg wa eingesetzt, das auf eine Temperatur von 150°C erhitzt wurde. Die Prüfung wurde gegenüber dem genannten FVV-Test unter verschärften Bedingungen durchgeführt: Temperatur der Flüssigkeit 95/105°C, Prüfzeit 48 h, Konzentration 20 Vol-%, Umwälzgeschwindigkeit 3,5 l/min, Heizflächenbelastung
80 W/cm².

Die Bewertung erfolgte durch Wiegung der gereinigten Prüfkörper vor und nach dem Arbeitsvorgang. Anzustreben ist dabei ein möglichst geringer Auftrag oder Abtrag auf dem Prüfmetall.

Die Ergebnisse dieser Korrosionsuntersuchungen sind in Tabelle II zusammengefaßt.

Wie die Ergebnisse zeigen, weisen erfindungsgemäße Kühlmittelzusammensetzungen einen wesentlich verbesserten Korrosionsschutz der Metalle auf als die vergleichsweise mitgeprüfte Flüssigkeit gemäß dem Stand der Technik. Dies gilt überraschenderweise sowohl hinsichtlich Eisen und Stahl im ASTM-Test D1384 als auch bei Leichtmetalllegierungen (Aluminiumlegierungen) im Heißkorrosionstest unter Wärmedurchgangsbedingungen. Der unerwartet gute Korrosionsschutz dürfte auf einem synergistischen Effekt beruhen, der gerade von der erfindungsgemäßen Formulierung ausgeht.

**Tabelle I**

| Zusammensetzung der Kühlmittelzusammensetzungen (Gew.-%) | | | | | | |
|---|---|---|---|---|---|---|
| Komponente | Vergleichsbeispiel | Beispiel A | Beispiel B | Beispiel C | Beispiel D | Beispiel E |
| Benzoesäure-Na-Salz | 0,15 | - | - | 1,50 | - | - |
| 2-Ethylhexansäure-Na-Salz | 4,10 | 3,92 | 3,92 | - | - | - |
| Dodecansäure-Na-Salz | - | - | - | 3,00 | - | - |
| Azelainsäure-Na-Salz | - | - | - | - | 3,10 | - |
| Sebazin-Na-Salz | - | - | - | - | - | 1,70 |
| Isononan-Na-Salz | - | - | - | - | - | 3,40 |
| Irgacor® L 190 (50 % WS) | - | 0,20 | 0,40 | 0,40 | 0,40 | 0,30 |
| Tolyltriazol | 0,20 | 0,20 | 0,20 | 0,20 | 0,10 | 0,20 |
| Benzotriazol | - | - | - | - | 0,10 | - |
| Mg(NO₃)* 6 H₂O | - | 0,05 | 0,05 | 0,03 | 0,15 | 0,08 |
| Monoethylenglykol | Rest auf 100 | Rest auf 100 | Rest auf 100 | Rest auf 100 | Rest auf 100 | Rest auf 100 |

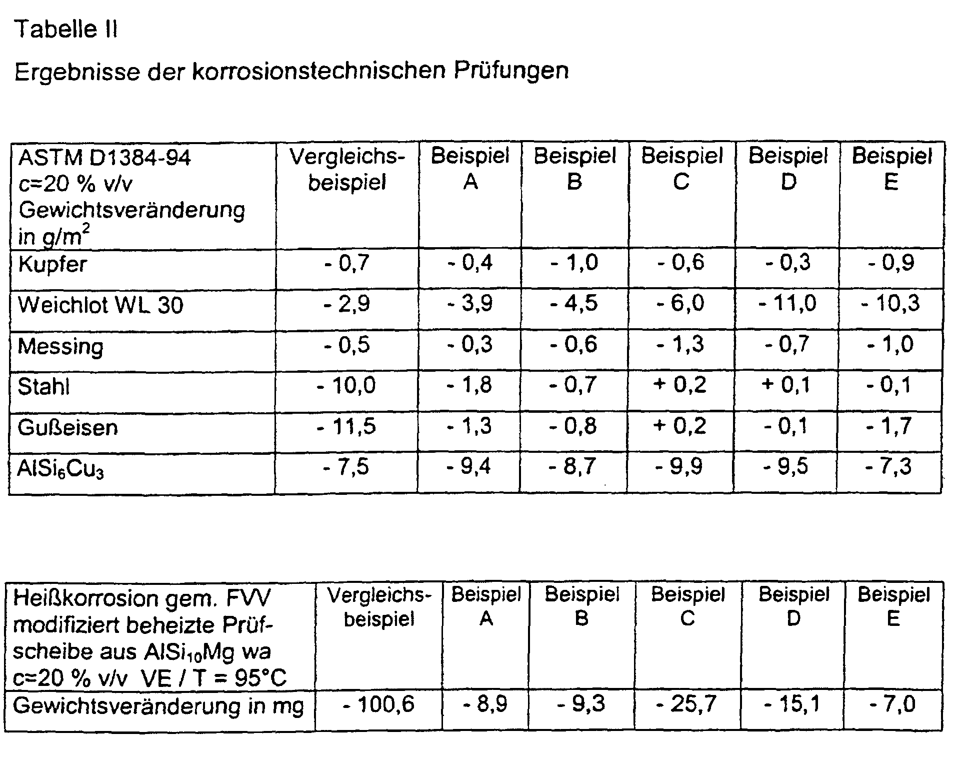

## Patentansprüche

1. Kühlmittelkonzentrat, das frei von Silikaten, Phosphaten, Nitriten, Boraten und Aminen ist, bestehend aus
a) 0,1 bis 6 Gew.-% mindestens einer Mono- und/oder Dicarbonsäure mit 4 bis 16 C-Atomen in Form von Alkalimetallsalzen
b) 0,02 bis 2 Gew.-% einer Triazin-triiminocarbonsäure in Form ihres Alkalimetallsalze
c) 0,02 bis 2 Gew.-% mindestens eines Kohlenwasserstofftriazols,
d) 0,01 bis 1 Gew.-% mindestens eines wasserlöslichen Erdalkalisalzes
e) gegebenenfalls bis 4 Gew.-% Wasser,
f) gegebenenfalls geeigneten Additiven, und
g) mindestens 90 Gew.-% Glykolen ad 100 Gew.-%.
jeweils bezogen auf das Gesamtgewicht des Konzentrats.

2. Kühlmittelkonzentrat gemäß Anspruch 1, worin es sich bei den Monocarbonsäuren um solche mit 5 bis 12 Kohlenstoffatomen handelt.

3. Kühlmittelkonzentrat gemäß Anspruch 1, worin es sich bei den Dicarbonsäuren um solche mit 4 bis 12 Kohlenstoffatomen handelt.

4. Kühlmittelkonzentrat gemäß einem oder mehreren der Ansprüche 1 bis 3, wobei die Triazintriiminocarbonsäure endständige Carbonsäurereste mit einer Kettenlänge von C₂ bis C₁₀ aufweist.

5. Kühlmittelkonzentrat gemäß einem oder mehreren der Ansprüche 1 bis 4, wobei das Kohlenwasserstofftriazol ein Benzotriazol und/oder Tolyltriazol, oder eines ihrer Derivate ist.

6. Kühlmittelkonzentrat gemäß einem oder mehreren der Ansprüche 1 bis 5, wobei das Erdalkalisalz ein Kalzium- und/oder Magnesiumsalz ist.

7. Kühlmittelkonzentrat gemäß einem oder mehreren der Ansprüche 1 bis 6, wobei das Glykol ein Ethylen- und/oder Propylenglykol mit 1 bis 3 Ethoxy- bzw. Propoxyeinheiten ist.

8. Kühlmittel, umfassend 10 bis 90 Gew.-% Wasser und ein Kühlmittelkonzentrat gemäß einem oder mehreren der Ansprüche 1 bis 7 ad 100 Gew.-%.

## Claims

1. A coolant concentrate which is free of silicates, phosphates, nitrites, borates and amines, and comprises
a) from 0.1 to 6% by weight of at least one monocarboxylic and/or dicarboxylic acid having from 4 to 16 carbon atoms in the form of alkali metal salts,
b) from 0.02 to 2% by weight of a triazinetriiminocarboxylic acid in the form of its alkali metal salt,
c) from 0.02 to 2% by weight of at least one hydrocarbon triazole,
d) from 0.01 to 1% by weight of at least one water-soluble alkaline earth metal salt,
e) if desired, up to 4% by weight of water,
f) if desired, suitable additives, and
g) at least 90% by weight of glycols to 100% by weight,
in each case based on the total weight of the concentrate.

2. A coolant concentrate as claimed in claim 1, wherein the monocarboxylic acids have from 5 to 12 carbon atoms.

3. A coolant concentrate as claimed in claim 1, wherein the dicarboxylic acids have from 4 to 12 carbon atoms.

4. A coolant concentrate as claimed in one or more of claims 1 to 3, wherein the triazinetriiminocarboxylic acid has terminal carboxylic acid groups having a chain length of from C₂ to C₁₀.

5. A coolant concentrate as claimed in one or more of claims 1 to 4, wherein the hydrocarbon triazole is a benzotriazole and/or tolyltriazole, or one of their derivatives.

6. A coolant concentrate as claimed in one or more of claims 1 to 5, wherein the alkaline earth metal salt is a calcium and/or magnesium salt.

7. A coolant concentrate as claimed in one or more of claims 1 to 6, wherein the glycol is an ethylene glycol and/or propylene glycol having from 1 to 3 ethoxy or propoxy units.

8. A coolant comprising from 10 to 90% by weight of water and a coolant concentrate as claimed in one or more of claims 1 to 7 to 100% by weight.

## Revendications

1. Concentré de fluide de refroidissement, qui est exempt de silicates, de phosphates, de nitrites, de borates et d'amines, constitué
a) de 0,1 à 6 % en poids d'au moins un acide mono- et/ou dicarboxylique ayant de 4 à 16 atomes de carbone sous forme de sels d'un métal alcalin,
b) de 0,02 à 2 % en poids d'un acide triazinetriiminocarboxylique sous forme de son sel d'un métal alcalin,
c) de 0,02 à 2 % en poids d'au moins un (radical hydrocarboné)triazole,
d) de 0,01 à 1 % en poids d'au moins un sel soluble dans l'eau d'un métal alcalino-terreux,
e) éventuellement, d'une quantité d'eau allant jusqu'à 4 % en poids,
f) éventuellement d'additifs appropriés, et
g) d'au moins 90 % en poids de glycols, en complément jusqu'à 100 % en poids,
tous les pourcentages étant rapportés au poids total du concentré.

2. Concentré de fluide de refroidissement selon la revendication 1, dans lequel, pour ce qui concerne les acides monocarboxyliques, il s'agit d'acides de ce type ayant de 5 à 12 atomes de carbone.

3. Concentré de fluide de refroidissement selon la revendication 1, dans lequel, pour ce qui concerne les acides dicarboxyliques, il s'agit d'acides de ce type ayant de 4 à 12 atomes de carbone.

4. Concentré de fluide de refroidissement selon l'une ou plusieurs des revendications 1 à 3, dans lequel l'acide triazinetriiminocarboxylique comprend des résidus acide carboxylique terminaux ayant une longueur de chaîne de C₂ à C₁₀.

5. Concentré de fluide de refroidissement selon l'une ou plusieurs des revendications 1 à 4, dans lequel le (radical hydrocarboné)triazole est un benzotriazole et/ou un tolyltriazole, ou l'un de leurs dérivés.

6. Concentré de fluide de refroidissement selon l'une ou plusieurs des revendications 1 à 5, dans lequel le sel d'un métal alcalino-terreux est un sel de calcium et/ou de magnésium.

7. Concentré de fluide de refroidissement selon l'une ou plusieurs des revendications 1 à 6, dans lequel le glycol est un éthylène- et/ou un propylèneglycol ayant respectivement 1 à 3 motifs éthoxy ou propoxy.

8. Fluide de refroidissement comprenant de 10 à 90 % en poids d'eau et un concentré de fluide de refroidissement selon l'une ou plusieurs des revendications 1 à 7, en complément à 100 % en poids.
